# EUROPÄISCHE PATENTSCHRIFT

(11) **EP 0 407 412 B1**
(45) Veröffentlichungstag und Bekanntmachung des Hinweises auf die Patenterteilung: **14.07.1993**
(21) Anmeldenummer: 89903476.3
(22) Anmeldetag: 25.03.1989
(51) Int. Cl.: C08B 37/16, C07B 63/00

(54) **SUBSTITUIERTE CYCLODEXTRINE UND VERFAHREN ZUR CHROMATOGRAPHISCHEN TRENNUNG CHIRALER ORGANISCHER VERBINDUNGEN**
SUBSTITUTED CYCLODEXTRINS AND PROCESS FOR CHROMATOGRAPHIC SEPARATION OF CHIRAL ORGANIC COMPOUNDS
CYCLODEXTRINES SUBSTITUEES ET PROCEDE DE SEPARATION CHROMATOGRAPHIQUE DE COMPOSES ORGANIQUES CHIRAUX

(30) Priorität: 30.03.1988 DE 3810737
(43) Veröffentlichungstag der Anmeldung: 16.01.1991
(73) Patentinhaber: MACHEREY, NAGEL & CO., D-52355 Düren (DE)
(72) Erfinder: KÖNIG, Wilfried, A., D-2080 Pinneberg (DE); WENZ, Gerhard, D-6500 Mainz (DE); LUTZ, Sabine, D-2000 Hamburg 60 (DE); VON DER BEY, Eva, D-6500 Mainz (DE)
(74) Vertreter: Klöpsch, Gerald, Dr.-Ing. Patentanwalt
(86) Internationale Anmeldenummer: EP8900332
(87) Internationale Veröffentlichungsnummer: WO8909235

(56) Entgegenhaltungen:
- EP-A- 0 146 841
- Tetrahedron, vol 39, Nr 9, 1983, Pergamon Press Ltd(Oxford), GB, A.p Groft et al.:"Synthesis of chemically modified cyclodextrins" pages 1417, 1427-1433, 1472 see page 1431.
- Starch/Stärke, vol 39, Nr 10, Okt 1987 VHC Verlagsgesellschaft mbh(Weinheim, DE)J.Szejtli:"Application of cyclodextrins in the chromatographie pages 357-362, see page 358 cited in the application.
- Cemicals absracts, vol 109, Nr 15, 10 okt 1988(Columbus, Ohio, US) W.A: Koenig et al:"Modified cyclodextrin a new highly enantioselective stationary phase for gas chromatography" page 331, abstract Nr 125206x, & Angew. Chem. 1988 100(7), 989-90.

## Beschreibung

Die Erfindung betrifft substituierte Cyclodextrine, ein Verfahren zu ihrer Herstellung sowie ein Verfahren zur Trennung von chiralen organischen Verbindungen durch chromatographische Trennverfahren, insbesondere Gaschromatographie, mit den substituierten Cyclodextrinen als stationärer Phase.

Substituierte Cyclodextrine sind beispielsweise aus der nicht vorveröffentlichten DE-OS 37 10 569 bekannt, die die Herstellung ultradünner Filme aus diesen Cyclodextrinverbindungen oder einer Einschlußverbindung auf Basis der Cyclodextrin-Verbindungen beschreibt. Diese ultradünne Filme können beispielsweise als Schutzfilm für gegen Licht und Sauerstoff empfindliche Verbindungen oder als Träger in der Chromatographie eingesetzt werden.

Triethyl-β-cyclodextrin ist im Journal of Pharmaceutical Sciences (1987, 660) beschrieben. Eine Alkyl-acyl-Verbindung (R₂=R₆=Methyl, R₃=Benzoyl, n=7, der nachfolgend genannten allgemeinen Formel) ist in J.Chem.Soc.Perkin Trans. (1987), 1323, beschrieben.

Einzelne Cyclodextrinderivate wurden auch als mögliche stationäre Phasen genannt, jedoch waren der Realisierung dieser Möglichkeit durch die Eigenschaften der bekannten Substanzen enge Grenzen gesetzt, wie beispielsweise in ACS Symposium Series, 1987, Bd. 342, S.200-217 und Starch/Stärke, 1987, Seite 357 bis 358 beschrieben ist.

Die Trennung von enantiomeren niedermolekularen chiralen Verbindungen auf gaschromatographischem Weg erfolgte bisher unter Verwendung chiraler niedermolekularer oder polymerer Trennphasen mit Amid- oder Diamid-Struktur.

Eine derartige Trennung ist nahezu ausschließlich auf Enantiomere beschränkt, die Amid-, Carbamat-, Oxim- oder Hydroxylgruppen tragen. Hierbei bilden sich intermolekulare Wasserstoffbrückenbindungen aus, so daß diastereomere Assoziate zwischen chiraler Trennphase und chiralen Substraten entstehen.

Zur Verbesserung der Trennergebnisse wurden die zu trennenden Enantiomeren vorwiegend in Derivate mit Amid- oder Carbamoyl-Funktionen überführt.

Die Schwerflüchtigkeit der gebildeten Derivate erfordert hohe Arbeitstemperaturen der chromatographischen Säulen und führt daher zu entsprechend unruhig verlaufenden Grundlinien der Chromatogramme und zu verminderter Trennwirksamkeit aufgrund von Querdiffusion.

Der vorliegenden Erfindung lag die Aufgabe zugrunde, verbesserte stationäre Phasen zur Trennung chiraler Verbindungen, insbesondere von Enantiomeren, sowie ein Verfahren zur Trennung chiraler Verbindungen bereitzustellen.

Es wurde überraschend gefunden, daß diese Aufgabe gelöst wird durch substituierte Cyclodextrine der allgemeinen Formel 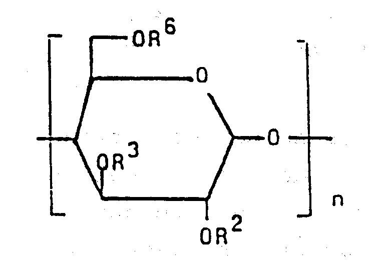
in der bedeuten:
R² und R⁶ geradkettige oder verzweigte Alkyl- oder Alkenylgruppen mit 1 bis 8 oder Cycloalkenylgruppen mit 5 bis 8 Kohlenstoffatomen, die gleich oder verschieden sein können und
R³ eine geradkettige oder verzweigte, mit den Resten R² und R⁶ gleiche oder verschiedene Alkyl- oder Alkenylgruppe mit 1 bis 8 oder Cycloalkylgruppe mit 5 bis 8 Kohlenstoffatomen oder
eine Acylgruppe mit einem ggfs. substituierten gesättigten oder olefinisch ungesättigten aliphatischen oder cycloaliphatischen oder einem aromatischen Kohlenwasserstoffrest mit 1 bis 8 Kohlenstoffatomen und
n = 6 oder 7,
wobei die Verbindungen mit
R² = R³ = R⁶ = Methyl, n = 6 oder 7
R² = R³ = R⁶ = Ethyl, n= 7
R² = R⁶ = Allyl, R³ = Methyl, n = 7
R² = R⁶ = Prop-1-enyl, R³ = Methyl, n = 7
R² = R⁶ = Methyl, R³ = n-Butyl, n = 7
R² = R⁶ = Methyl, R³ = Benzoyl, n = 7 und
R² = R³ = Alkyl oder Acyl, R⁶ = C _{>4}-Alkyl
ausgeschlossen sind.
Eine weitere Lösung der der Erfindung zugrundeliegenden Aufgabe liegt in der Bereitstellung eines Verfahrens zur chromatographischen Trennung von chiralen Verbindungen, insbesondere Enantiomeren.
Hierbei sind die Verbindungen mit
R² = R³ = R⁶ = Methyl, n=6 oder 7
R² = R⁶ = Allyl, R³ = Methyl, n= 7
R² = R⁶ = Prop-1-enyl, R³ = Methyl, n=7
R² = R⁶ = Methyl, R³ = n-Butyl, n=7.
ausgenommen.

Die erfindungsgemäßen substituierten Cyclodextrine ermöglichen eine Enantiomerentrennung, die hauptsächlich durch Inklusionseffekte an den makrocyclischen chiralen Cyclodextrinen bedingt ist, und aufgrund des gegenüber den Trennphasen des Standes der Technik völlig andersartigen Trennmechanismus auch auf Enantiomere angewendet werden kann, die nicht zur Ausbildung von Wasserstoffbrücken befähigt sind und daher an den bisher benützten chiralen Trennphasen nichtgetrennt werden konnten.

Die erfindungsgemäßen Verbindungen weisen für eine Anwendung als Trennphasen in der Gaschromatographie einerseits den Vorteil einer sehr hohen Temperaturbeständigkeit bis über 200°C auf, andererseits ermöglicht der gegenüber bisher bekannten Trennphasen andersartige Trennmechanismus jedoch in den meisten Fällen die Überführung in sehr leicht flüchtige Derivate, wie trifluoracetylierte Verbindungen, die bei entsprechend tiefen Temperaturen aus der Säule eluiert werden.

Besonders bevorzugt aus der Reihe der erfindungsgemäßen Verbindungen der O-peralkylierten α- und β-Cyclodextrinderivate und derjenigen, bei denen die Hydroxylgruppen des Cyclodextrin in 2- und 6-Stellung der Glukosebausteine alkyliert und die Hydroxylgruppe in 3-Stellung acyliert sind, sind die Verbindungen, bei denen die Reste R², R³ und R⁶ Alkyl- oder Alkenylgruppen mit 3 bis 6 Kohlenstoffatome sind und/oder R³ die Acetylgruppe bedeutet.

Insbesondere sind die substituierten Cyclodextrine bevorzugt, die aus 6 oder 7 Glukoseringen bestehen und als Substituenten R², R³ und R⁶ die n-Pentyl-Gruppe oder als Substituent R³ die-Acetylgruppe und als R² und R⁶ n-Pentyl-Gruppen enthalten.

Die erfindungsgemäßen Produkte werden hergestellt, indem zunächst α- oder β-Cyclodextrin in einem wasserfreien Lösungsmittel gelöst und unter Zugabe von gepulvertem Alkalihydroxid mit einem Alkylhalogenid umgesetzt wird. Diese Reaktionsstufe kann so geführt werden, daß wahlweise die Hydroxylgruppen in 2- und 6-Position oder die drei in 2-, 3- und 6-Position befindlichen Hydroxylgruppen alkyliert werden.

Das 2,6-di-O-alkylierte Zwischenprodukt wird ggfs. isoliert und in einem wasserfreien Lösungsmittel unter Zugabe eines tertiären Amins mit einem Acylierungsmittel, vorzugsweise einem Säureanhydrid oder -chlorid, umgesetzt.

Als wasserfreie Lösungsmittel werden bevorzugt aprotische Lösungsmittel eingesetzt.

Die Umsetzungen werden bevorzugt unter Inertgas durchgeführt.

Die jeweils erhaltenen Rohprodukte können säulenchromatographisch gereinigt und in reiner Form isoliert werden. Die Charakterisierung erfolgte über ¹H- bzw. ¹³C-Kernresonanzspektroskopie und durch chemischen Abbau mit nachfolgender Analyse der Abbauprodukte durch kombinierte Gaschromatographie und Massenspektrometrie entsprechend P. Mischnick-Lübbecke, W.A. König und M. Radeloff, Starch/Stärke 39 (1987) 425.

Die Belegung der Trennkapillaren mit den erfindungsgemäß substituierten Cyclodextrinen erfolgt nach W.A. König und K. Ernst, J. Chromatogr. 280 (1983) 135. Die mit den Trennphasen gemäß der Erfindung belegten Kapillaren eignen sich insbesondere zur Trennung von beispielsweise Enantiomeren von Diolen, Polyolen, Monosacchariden, Methylglykosiden, 1,5-Anhydroalditolen, Hydroxysäureestern, Alkoholen, Aldolen, Lactonen, Spiroacetalen , Aminoalkoholen, Aminen, Aminosäureestern und anderen chiralen Verbindungen, die erforderlichenfalls nach bekannten Verfahren mit Trifluoressigsäureanhydrid in Dichlormethan trifluoracetyliert und somit in für die Gaschromatographie geeignete, flüchtige Derivate überführt werden können.

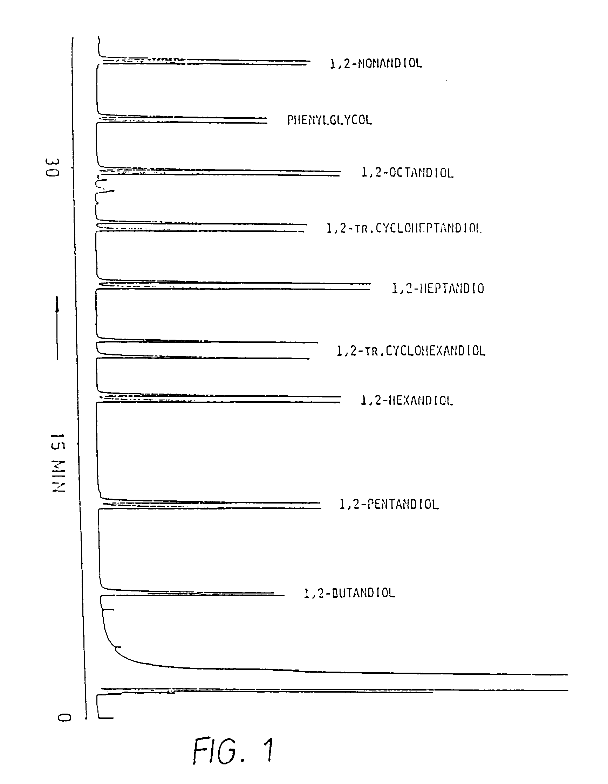

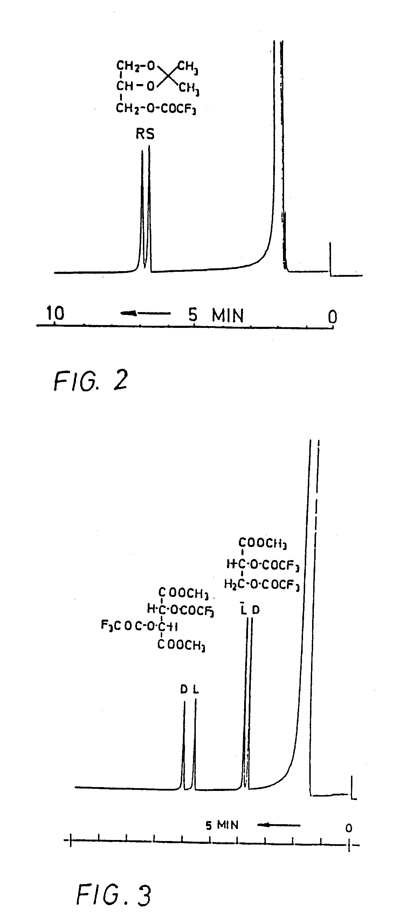

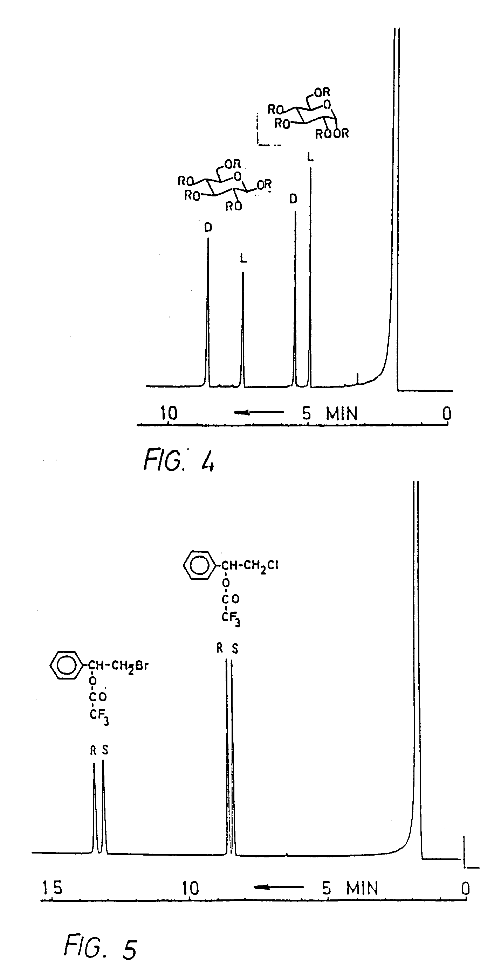

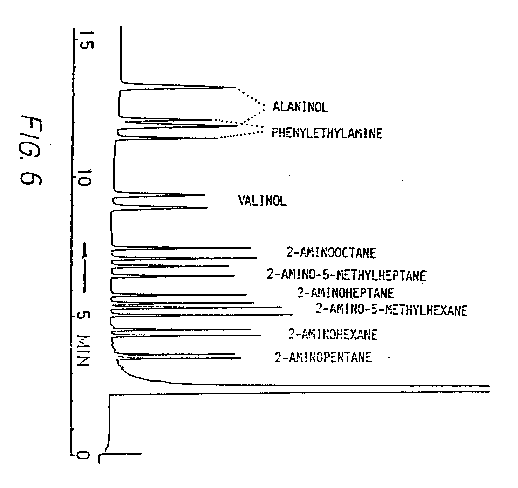

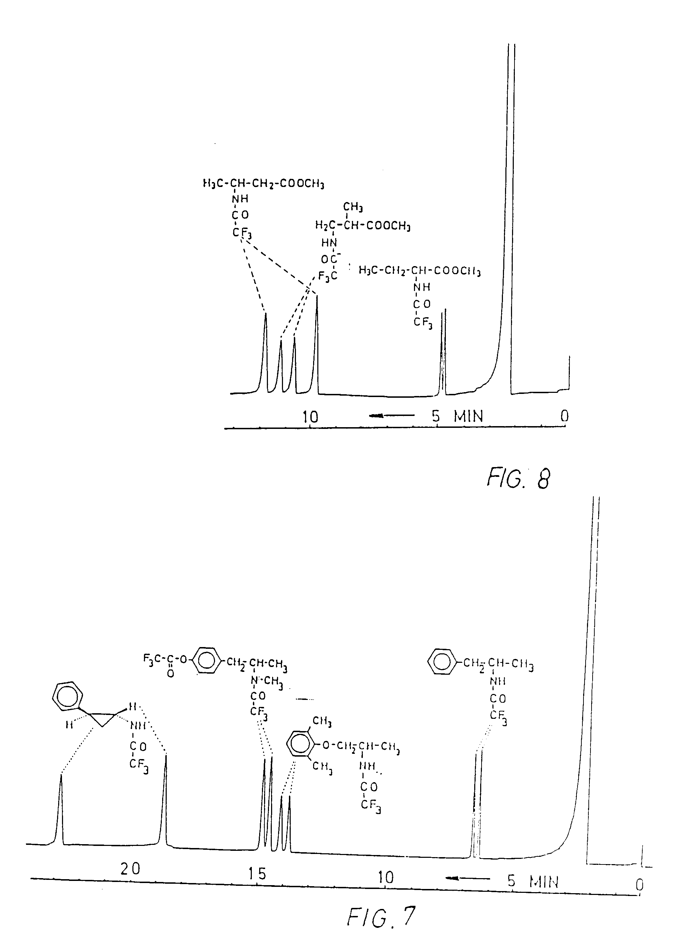

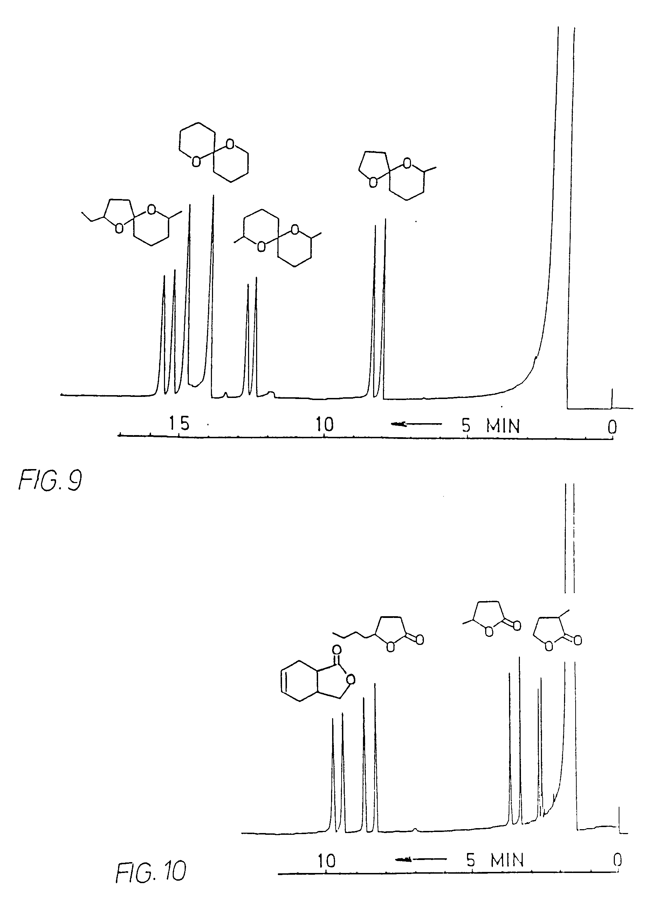

Mit den erfindungsgemäßen Trennphasen wurden 25 m, 40 m oder 50 m lange Glas- oder "fused-silica"-Kapillaren belegt. Die Figuren 1 bis 10 zeigen beispielhaft durchgeführte Trennungen von Enantiomeren an den Trennphasen Hexakis(2,3,6-tri-O-pentyl)-α-cyclodextrin (Fig. 1-5 und 9) Hexakis(2,6-di-O-pentyl-3-O-acetyl)-α-cyclodextrin (Fig. 10) bzw. Heptakis(2,6-di-O--pentyl-3-O-acetyl)-β-cyclodextrin (Fig. 6-8). Die Figuren zeigen deutlich die ruhige Grundlinie der Chromatogramme und die ausgezeichnete Trennwirkung der mit den erfindungsgemäß substituierten Cyclodextrinen belegten Trennsäulen.

Im einzelnen zeigen die Figuren folgende beispielhafte Trennungen:
Figur 1:
   Enantiomerentrennung einer Mischung razemischer Diole nach Trifluoracetylierung. 40 m-Glaskapillare mit Hexakis(2,3,6-tri-O-pentyl)-α-cyclodextrin; 48°C, 5 min. isotherm, dann 2°/min.
Figur 2:
   Enantiomerentrennung von Isopropylidenglycerin nach Trifluoracetylierung. 40 m Glaskapillare mit Hexakis(2,3,6-tri-O-pentyl)-α-cyclodextrin; 70°C.
Figur 3:
   Enantiomerentrennung von Glycerinsäure und Weinsäure nach Veresterung mit methanolischer HCl und Trifluoracetylierung; 40 m Glaskapillare mit Hexakis(2,3,6-tri-O-pentyl)-α-cyclodextrin; 90°C.
Figur 4:
   Enantiomerentrennung von D- und L-Glucose nach Trifluoracetylierung. 40 m Hexakis(2,3,6-tri-O-pentyl)-α -cyclodextrin-Glaskapillare; 115°C.
Figur 5:
   Enantiomerentrennung von 2-Chlor-1-phenylethanol und 2-Brom-1phenylethanol nach Trifluoracetylierung. 40 m Glaskapillare mit Hexakis(2,3,6-tri-O-pentyl)-α-cyclodextrin; 110°C.
Figur 6:
   Enantiomerentrennung von Aminen und Aminoalkoholen nach Trifluoracetylierung. R-Enantiomere werden zuerst eluiert. 45 m Glaskapillare mit Heptakis(2,6-di-O-pentyl-3-O-acetyl)-β-cyclodextrin; 140°C, 2°/min.
Figur 7:
   Enantiomerentrennung von chiralen Pharmaceutica (Amphetamin, Mexiletin, Pholedrin, Tranylcypromin). 45 m Glaskapillare mit Heptakis(2,6-di-O-pentyl-3-O-acetyl)-β-cyclodextrin; 175°C.
Figur 8:
   Enantiomerentrennung von α-Aminobuttersäure, β-Aminobuttersäure und β-Aminoisobuttersäure nach Veresterung mit methanolischer HCl und Trifluoracetylierung. 45 m Glaskapillare mit Heptakis(2,6-di-O-pentyl-3-O--acetyl)-β-cyclodextrin; 140°C.
Figur 9:
   Enantiomerentrennung von Spiroacetalen. 40 m Glaskapillare mit Hexakis(2,3,6-tri-O-pentyl)-α-cyclodextrin; 100°C.
Figur 10:
   Enantiomerentrennung von γ-Lactonen. 38 m Glaskapillare mit Hexakis(3-O-acetyl-2,6-di-O-pentyl)-α-cyclodextrin; 150°C.

Die Erfindung wird anhand der nachstehenden Beispiele erläutert:

### Beispiel 1:

Herstellung von Hexakis(2,6-di-O-pentyl)-α-cyclodextrin 10.5 g (10 mmol) α-Cyclodextrin (Consortium für Elektrochemische Industrie, München) werden in 250 ml Dimethylsulfoxid (Riedel-de Haen) (getrocknet über Molekularsieb 4 Å) unter Schutzgas (Stickstoff) gelöst. Dazu werden 14.4 g (360 mmol) gepulvertes Natriumhydroxid (Merck) und 54.4 g n-Pentylbromid (Fluka) gegeben und bei Raumtemperatur gerührt. Das Ausfallen eines weißen Niederschlags (Natriumbromid) weist auf das Einsetzen der Reaktion hin. Im Verlaufe von 4 weiteren Tagen werden täglich jeweils 18.5 g (120 mmol) n-Pentylbromid und 4.8 g (120 mmol) Natriumhydroxid zugegeben. Nach insgesamt 5 Tagen Reaktionszeit wird die Reaktionsmischung auf 1.5 l Wasser gegossen und zweimal mit 500 ml t-Butyl-methylether extrahiert. Die vereinigten Etherphasen werden mit Wasser und konz. Kochsalzlösung gewaschen und im Vakuum konzentriert. Der Rückstand, ein gelbes Öl , wird im Vakuum (0.05 torr) 16 Stunden bei 70°C getrocknet.
Das Rohprodukt (15 g) wird durch Säulenchromatographie über 500 g Kieselgel Si6O (40-60 µm; Merck) fraktioniert. Als Laufmittel dient Petrolether (Siedebereich 60-90°C) / t-Butyl-methylether, Mischungsverhältnis 70:30 (v/v). Es werden folgende Fraktionen erhalten:
I 800 ml Verunreinigung
II 775 ml reines Produkt
III 700 ml verunreinigtes Produkt
Die Volumina der Fraktionen hängen etwas vom Wassergehalt des Kieselgels ab. Nach Abdestillieren des Lösungsmittels von Fraktion II und Trocknen im Vakuum (0.05 torr) bei 70°C werden 7.42 g des reinen Produkts in Form eines farblosen Glases erhalten.

¹H-NMR-Daten (Bruker, 300 MHz, interner Standard Tetramethylsilan, δ-Werte in Toluol-d₈): 5.04 (C₁-H), 3.37 (C₂-H), 4.37 (C₃-H), 3.69 (C₄-H), 4.00 (C₅-H), 3.84 (C₆-Hₐ), 4.0 (C₆-H_{b}), 3.57 (O-CH₂₍₆₎), 3.65 (O-CH_{2(6')}), 3.57 (O-CH_{2(2')}9, 4.15 (O-CH₂₍₂₎), 1.5 -1.7 (O-CH₂-CH₂), 1.2 -1.4 (O-CH₂-CH₂-CH₂), 1.2 -1.4 (O-CH₂-CH₂-CH₂-CH₂), 0.8 -1.0 (CH₃), 5.33 (OH).

### Beispiel 2:

Hexakis(2,3,6-tri-O-pentyl)-α-cyclodextrin 10.5 g (10 mmol) α-Cyclodextrin werden gemäß Beispiel 1 mit n-Pentylbromid/Natriumhydroxid umgesetzt. Das dabei erhaltene Rohprodukt wird in 300 ml Tetrahydrofuran (Fluka, getrockent über Natrium/Benzophenon) unter Schutzgas (Stickstoff) gelöst. Diese Lösung wird zu 4.3 g (180 mmol) Natriumhydrid (Fluka, 80% Suspension in Mineralöl) gegeben. Anhaftendes Mineralöl wird durch Waschen des Natriumhydrids mit Tetrahydrofuran entfernt. Anschließend werden 27.2 g (180 mmol) n-Pentylbromid (Fluka) dazugegeben und 5 Tage unter Rühren am Rückfluß gekocht. Danach wird die Reaktionsmischung auf 500 ml Wasser gegossen und das Tetrahydrofuran abdestilliert. Der Rest wird zweimal mit je 200 ml t-Butyl-methylether ausgeschüttelt. Die vereinigten Etherphasen werden mit Wasser und konz. Kochsalzlösung gewaschen und im Vakuum eingeengt. Der gelbe, ölige Rückstand wird im Vakuum (0.05 torr) 1 6 Stunden bei 70°C getrocknet.
Das Rohprodukt wird durch Säulenchromatographie über 500 g Kieselgel Si6O (Merck, 40-63 µm) fraktioniert.

Als Laufmittel dient Petrolether (Siedebereich 60-95°C) / t-Butyl-methylether im Mischungsverhältnis 85:15 (v/v). Es werden folgende Fraktionen erhalten:
I 825 ml Verunreinigung
II 150 ml reines Produkt (8.0 g)
III 225 ml verunreinigtes Produkt (5.0 g)
Die Volumina der Fraktjonen hängen etwas vom Wassergehalt des Kieselgels ab. Durch Chromatographie der Fraktion III konnten nochmals 2.5 g reines Produkt erhalten werden. Das Produkt ist nach der Chromatographie leicht gelblich. Nach Filtrieren über 50 g Aluminiumoxid (basisch, Merch) mit Petrolether/t-Butylmethylether 85:15 (v/v) ist die Verbindung ein farbloses, viskoses Öl.

¹H-NMR-Daten (Bruker, 300 MHz, interner Standard Tetramethylsilan, δ-Werte in CDCl₃): 5.21 (C₁-H), 3.21 (C₂-H), 3.59 (C₃-H), 3.79 (C₄-H), 3.70 (C₅-H), 3.45 (C₆-Hₐ), 3.98 (C₆-H_{b}), 3.35 (O-CH₂₍₆₎), 3.47 (O-CH_{2(6')}), 3.66 (O-CH_{2(2')}), 3.95 (O-CH₂₍₂₎), 3.53 (O-CH₂₍₃₎), 3.62 (O-CH_{2(3')}), 1.5 -1.7 (O-CH₂-CH₂), 1.2 -1.4 (O-CH₂-CH₂-CH₂), 1.2 - 1.4 (O-CH₂-CH₂-CH₂-CH₂), 0.8 - 1.0 (CH₃).

### Beispiel 3:

Heptakis(2,6-di-O-pentyl-3-acetyl)-β-cyclodextrin 1.06 g (0.5 mmol) Heptakis(2,6-di-O-pentyl)-β-cyclodextrin (hergestellt entsprechend der Vorschrift in Beispiel 2) werden mit 21 mg (0.175 mmol) 4-Dimethylaminopyridin (Merck) in 5 ml CH₂Cl₂ (Aldrich; getrocknet durch Destillation über Diphosphorpentoxid) über Stickstoff als Schutzgas gelöst. Dazu werden zuerst 0.6 ml (8 mmol) Triethylamin (Fluka, getrocknet durch Destillation über Calciumhydrid) und anschließend 0.7 ml (7 mmol) Acetanhydrid (Fluka) gegeben. Nach 24 Std. Kochen am Rückfluß werden weitere 0.6 ml (8 mmol) Triethylamin und 0.7 ml (7 mmol) Acetanhydrid zugegeben. Nach 72 Std. Reaktionszeit wird das Lösungsmittel im Wasserstrahl-Vakuum entfernt und der Rückstand in 40 ml t-Butylmethylether (Merck) aufgenommen. Die organische Phase wird mit Wasser, verdünnter NaHCO₃-Lösung, nochmals Wasser, verd. NaH₂PO₄-Lösung und Wasser gewaschen. Dann wird die organische Phase im Vakuum konzentriert und nach Trocknen im Vakuum (0.05 torr) erhält man ein orange-braunes Öl. Das erhaltene Rohprodukt (0.93 g) wird durch Chromatographie über 35 g Kieselgel Si6O (Merck, 40-63 µm) fraktioniert. Als Elutionsmittel dient Dichlormethan/t-Butylmethylehter 50:50 (v/v). Es werden folgende Fraktionen erhalten:
I 65 ml Verunreinigung
II 40 ml verunreinigtes Produkt
III 180 ml reines Produkt
Nach Abdestillieren des Lösungsmittel und Trocknen erhält man 0.34 g des reinen Produkts als gelbliches Glas.

¹H-NMR-Daten (Bruker, 300 MHz, interner Standard Tetramethylsilan, δ-Werte in CDCl₃): 5.03 (C₁-H), 3.26-3.30 (C₂-H), 5.18 (C₃-H), 3.81 (C₄-H), 3.90 - 3.99 (C₅-H und C₆-H), 3.36 - 3.54 (C_{6'}-H, O-CH₂₍₆₎, O-CH_{2(6')}, O-CH₂₍₂₎, O-CH_{2(2')}), 1.4 - 1.59 (O-CH₂-CH₂, O-CH₂-CH₂-CH₂), 1.21 - 1.33 (O-CH₂-CH₂-CH₂-CH₂), 0.86 - 0.92 (CH₃); 2.05 (CH₃-CO).

## Patentansprüche

1. Substituierte Cyclodextrine der allgemeinen Formel 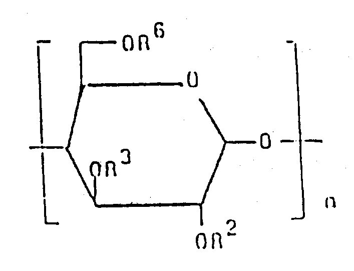 in der bedeuten:
R² und R⁶ geradkettige oder verzweigte Alkyl- oder Alkenylgruppen mit 1 bis 8 oder Cycloalkylgruppen mit 5 bis 8 Kohlenstoffatomen, die gleich oder verschieden sein können und
R³ eine geradkettige oder verzweigte, mit den Resten R² und R⁶ gleiche oder verschiedene Alkyl- oder Alkenylgruppe mit 1 bis 8 oder Cycloalkylgruppe mit 5 bis 8 Kohlenstoffatomen oder
eine Acylgruppe mit einem ggfs. substituierten gesättigten oder olefinisch ungesättigten aliphatischen oder cycloaliphatischen oder einem aromatischen Kohlenwasserstoffrest mit 1 bis 8 Kohlenstoffatomen und n = 6 oder 7,
wobei die Verbindungen mit
R² = R³ = R⁶ = Methyl, n = 6 oder 7
R² = R³ = R⁶ = Ethyl, n= 7
R² = R⁶ = Allyl, R³ = Methyl, n = 7
R² = R⁶ = Propen-(1)-yl, R³ = Methyl, n = 7
R² = R⁶ = Methyl, R³ = n-Butyl, n = 7
R² = R⁶ = Methyl, R³ = Benzoyl, n = 7 und
R² = R³ = Alkyl oder Acyl, R⁶ = C _{>4}-Alkyl
ausgenommen sind.

2. Substituierte Cyclodextrine nach Anspruch 1, bei denen die Alkyl- und/oder Acylgruppen 3 bis 6 Kohlenstoffatome aufweisen.

3. Substituierte Cyclodextrine nach Anspruch 1, bei denen die Reste R², R³ und R⁶ Alkyl- oder Alkenylgruppen mit 3-6 Kohlenstoffatomen sind und/oder R³ die Acetylgruppe bedeutet.

4. Substituierte Cylcodextrine nach Anspruch 1, wobei R² und R⁶ eine n-Pentyl-Gruppe und R³ eine Acetylgruppe ist.

5. Verfahren zur Herstellung der substiuierten Cyclodextrine gemäß Anspruch 1, bei dem in einer ersten Stufe α -oder β-Cyclodextrin in einem wasserfreien Lösungsmittel gelöst und unter Zugabe von pulversisiertem Alkalihydroxid mit einem Alkylhalogenid umgesetzt und
ggfs. das aus dieser ersten Stufe isolierte Alkylierungsprodukt unter Zugabe eines Amins in einem wasserfreien Lösungsmittel mit einem Acylierungsmittel umgesetzt wird.

6. Verfahren nach Anspruch 5, dadurch gekennzeichnet, daß als wasserfreie Lösungsmittel aprotische Lösungsmittel eingesetzt werden.

7. Verfahren nach Anspruch 5 oder 6, dadurch gekennzeichnet, daß die Umsetzungen unter Inertgas durchgeführt werden.

8. Verfahren zur Trennung von chiralen organischen Verbindungen durch chromatographische Trennverfahren, insbesondere durch Gaschromatographie, bei dem als stationäre Phase substituierte Cyclodextrine der allgemeinen Formel verwendet werden: 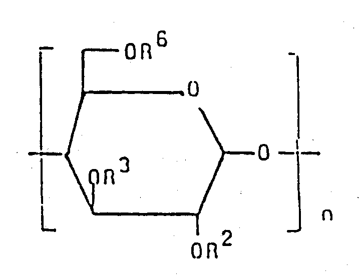 , wobei
R² und R⁶ geradkettige oder verzweigte Alkyl- oder Alkenylgruppen mit 1 bis 8 oder Cycloalkylgruppen mit 5 bis 8 Kohlenstoffatomen, die gleich oder verschieden sein können und
R³ eine geradkettige oder verzweigte, mit den Resten R² und R⁶ gleiche oder verschiedene Alkyl- oder Alkenylgruppe mit 1 bis 8 oder Cycloalkylgruppe mit 5 bis 8 Kohlenstoffatomen oder
eine Acylgruppe mit einem ggfs. substituierten gesättigten oder olefinisch ungesättigten aliphatischen oder cycloaliphatischen oder einem aromatischen Kohlenwasserstoffrest mit 1 bis 8 Kohlenstoffatomen und n = 6 oder 7
bedeuten und die folgenden Verbindungen ausgenommen sind:
R² = R³ = R⁶ = Methyl, n=6 oder 7
R² = R⁶ = Allyl, R³ = Methyl, n= 7
R² = R⁶ = Propen-(1)-yl, R³ = Methyl, n=7
R² = R⁶ = Methyl, R³ = n-Butyl, n=7.

9. Verfahren nach Anspruch 8, dadurch gekennzeichnet, daß die substituierten Cyclodextrine zur Trennung von Enantiomeren verwendet werden.

10. Verfahren nach Anspruch 9, dadurch gekennzeichnet, daß die substituierten Cyclodextrine zur Trennung von Enantiomeren von Diolen, Polyolen, Monosacchariden Methylglykosiden, 1,5-Anhydroalditolen, Hydroxysäureestern, Alkoholen, Aldolen, Lactonen, Spiroacetalen, Aminoalkoholen, Aminen, Aminosäureestern verwendet werden, gegebenenfalls nach Trifluoracetylierung dieser Substanzen nach an sich bekannten Verfahren.

## Claims

1. Substituted cyclodextrins of the general formula 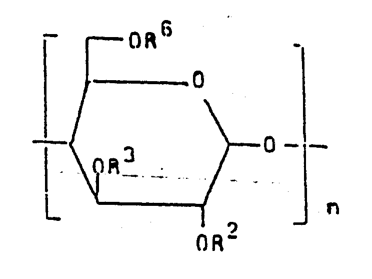 in which
R² and R⁶ mean straight-chain or branched alkyl or alkenyl groups with 1 to 8, or cycloalkyl groups with 5 to 8 carbon atoms which may be the same or different, and
R³ represents a straight-chain or branched alkyl or alkenyl group, which may be the same or different to the residues R² and R⁶, with 1 to 8, or a cycloalkyl group with 5 to 8 carbon atoms, or
an acyl group with an optionally substituted, saturated or olefinically unsaturated aliphatic or cycloaliphatic or with an aromatic hydrocarbon residue with 1 to 8 carbon atoms, and
n = 6 or 7,
whereby the compounds with
R² = R³ = R⁶ = methyl, n = 6 or 7
R² = R³ = R⁶ = ethyl, n = 7
R² = R⁶ = allyl, R³ = methyl, n = 7
R² = R⁶ = propen-(1)-yl, R³ = methyl, n = 7
R² = R⁶ = methyl, R³ = n-butyl, n = 7
R² = R⁶ = methyl, R³ = benzoyl, n = 7 and
R² = R³ = alkyl or acyl, R⁶ = C _{>4}-alkyl
are excluded.

2. Substituted cyclodextrins according to claim 1, wherein the alkyl and/or acyl groups have 3 to 6 carbon atoms.

3. Substituted cyclodextrins according to claim 1, wherein the residues R², R3, and R6 are alkyl or alkenyl groups with 3 to 6 carbon atoms and/or R³ represents the acetyl group.

4. Substituted cyclodextrins according to claim 1, wherein R² and R⁶ is a n-pentyl-group and R³ is an acetyl group.

5. A process for the production of the substituted cyclodextrins according to claim 1, in which in a first stage α- or β-cyclodextrin is dissolved in an anhydrous solvent and reacted with an alkyl halide under the addition of pulverized alkali hydroxide and,
optionally, the alkylation product isolated from this first stage is reacted with an acylating agent under the addition of an amine in an anhydrous solvent.

6. A process according to claim 5 characterized in that aprotic solvents are used as anhydrous solvents.

7. A process according to claims 5 or 6 characterized in that the reactions are carried out under inert gas.

8. A process for separating chiral organic compounds by chromatographic separation processes, in particular by gas chromatography, in which substituted cyclodextrins of the general formula 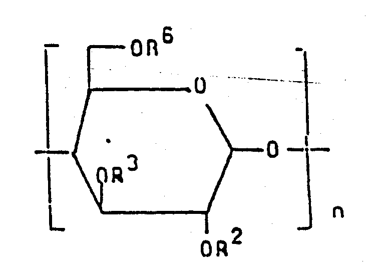 are used as stationary phase, wherein
R² and R⁶ mean straight-chain or branched alkyl or alkenyl groups with 1 to 8, or cycloalkyl groups with 5 to 8 carbon atoms which may be the same or different, and
R³ represents a straight-chain or branched alkyl or alkenyl group, which may be the same or different to the residues R² and R⁶, with 1 to 8, or a cycloalkyl group with 5 to 8 carbon atoms, or
an acyl group with an optionally substituted, saturated or olefinically unsaturated aliphatic or cycloaliphatic or with an aromatic hydrocarbon residue with 1 to 8 carbon atoms, and
n = 6 or 7,
whereby the following compounds are excluded
R² = R³ = R⁶ = methyl, n = 6 or 7
R² = R⁶ = allyl, R³ = methyl, n = 7
R² = R⁶ = propen-(1)-yl, R³ = methyl, n = 7
R² = R⁶ = methyl, R³ = n-butyl, n = 7

9. A process according to claim 8 characterized in that the substituted cyclodextrins are used to separate enantiomers.

10. A process according to claim 9 characterized in that the substituted cyclodextrins are used to separate enantiomers of diols, polyols, monosaccharides, methylglycosides, 1,5-anhydro-alditols, hydroxy esters, alcohols, aldols, lactones, spiro-acetals, amino alcohols, amines, amino-acid esters, optionally after trifluoroacetylation of said substances according to processes known per se.

## Revendications

1. Cyclodextrines substituées qui répondent à la formule générale suivante 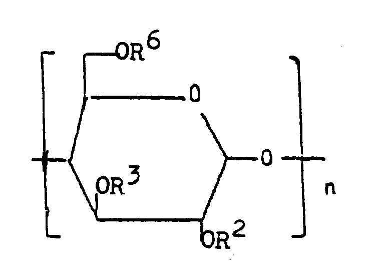 dans laquelle
R² et R⁶ représentent des radicaux alkyle ou alcényle, à chaîne droite ou à chaîne ramifiée, comportant de 1 à 8 atomes de carbone, ou des radicaux cycloalkyle comportant de 5 à 8 atomes de carbone, qui peuvent être identiques ou différents et
R³ représente un radical alkyle ou alcényle, à chaîne droite ou à chaîne ramifiée, comportant de 1 à 8 atomes de carbone, ou des radicaux cycloalkyle comportant de 5 à 8 atomes de carbone, R³ ayant des significations identiques ou différentes de R² et R⁶, ou bien
R³ représente un radical acyle avec un reste hydrocarboné aromatique, cycloaliphatique, ou aliphatique, saturé ou oléfiniquement insaturé, éventuellement substitué et n est égal à 6 ou à 7,
cyclodextrines dont sont exclus les composés avec
R² = R³ = R⁶ = méthyle, n = 6 ou 7
R² = R³ = R⁶ = éthyle, n = 7
R² = R⁶ = allyle, R³ = méthyle, n = 7
R² = R⁶ = propène-(1)-yle, R³ = méthyle, n = 7
R² = R⁶ = méthyle, R³ = n-butyle, n = 7
R² = R⁶ = méthyle, R³ = benzoyle, n = 7 et
R² = R³ = alkyle ou acyle, R⁶ = alkyle-C_{>4}.

2. Cyclodextrines substituées suivant la revendication 1, caractérisées en ce que les radicaux alkyle et/ou acyle comportent de 3 à 6 atomes de carbone.

3. Cyclodextrines substituées selon la revendication 1, caractérisées en ce que les symboles R², R³ et R⁶ représentent des radicaux alkyle ou alcényle qui comportent de 3 à 6 atomes de carbone et/ou R³ représente le radical acétyle.

4. Cyclodextrines substituées suivant la revendication 1, caractérisées en ce que les symboles R² et R⁶ représentent chacun un radical n-pentyle et R³ représente le radical acétyle.

5. Procédé de préparation des cyclodextrines substituées suivant la revendication 1, caractérisé en ce que, au cours d'une première étape, on dissout l'alpha- ou la bêta-cyclodextrine dans un solvant dépourvu d'eau et on la fait réagir avec un halogénure d'alkyle, sous addition d'un hydroxyde de métal alcalin pulvérisé et on fait réagir le produit d'alkylation isolé à partir de cette première étape avec un agent d'acylation, sous addition d'une amine, dans un solvant dépourvu d'eau.

6. Procédé suivant la revendication 5, caractérisé en ce que l'on utilise des solvants aprotiques à titre de solvants dépourvus d'eau.

7. Procédé suivant la revendication 5 ou 6, caractérisé en ce que l'on entreprend les réactions sous une atmosphère d'un gaz inerte.

8. Procédé de séparation de composés organiques chiraux par des processus de séparation chromatographiques, plus particulièrement par chromatographie en phase gazeuse, caractérisé en ce qu'à titre de phase stationnaire, on utilise des cyclodextrines substituées de la formule générale : 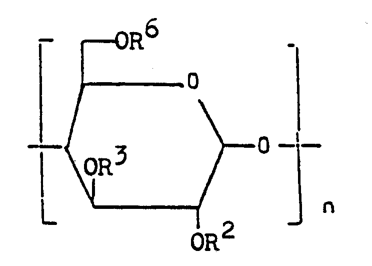 dans laquelle
R² et R⁶ représentent des radicaux alkyle ou alcényle, à chaîne droite ou à chaîne ramifiée, comportant de 1 à 8 atomes de carbone, ou des radicaux cycloalkyle comportant de 5 à 8 atomes de carbone, qui peuvent être identiques ou différents et
R³ représente un radical alkyle ou alcényle, à chaîne droite ou à chaîne ramifiée, comportant de 1 à 8 atomes de carbone, ou des radicaux cycloalkyle comportant de 5 à 8 atomes de carbone, R³ ayant des significations identiques ou différentes de R² et R⁶, ou bien
R³ représente un radical acyle avec un reste hydrocarboné aromatique, cycloaliphatique, ou aliphatique, saturé ou oléfiniquement insaturé, éventuellement substitué et n est égal à 6 ou à 7,
et d'où sont exclus les composés qui suivent :
R² = R³ = R⁶ = méthyle, n = 6 ou 7
R² = R⁶ = allyle, R³ = méthyle, n = 7
R² = R⁶ = propène-(1)-yle, R³ = méthyle, n = 7
R² = R⁶ = méthyle, R³ = n-butyle, n = 7.

9. Procédé suivant la revendication 8, caractérisé en ce que l'on utilise les cyclodextrines substituées pour la séparation d'énantiomères.

10. Procédé suivant la revendication 9, caractérisé en ce que l'on utilise les cyclodextrines substituées pour la séparation d'énantiomères de diols, de polyols, de monosaccharides, de méthylglucosides, de 1,5-anhydroalditols, des esters d'hydroxyacides, des alcools, des aldols, des lactones, des spiroacétals, des aminoalcools, des amines, des esters d'aminoacides, éventuellement après trifluoracétylation de ces substances, effectuée selon des procédés connus.
